# EUROPÄISCHE PATENTSCHRIFT

(11) **EP 3 548 577 B1**
(45) Veröffentlichungstag und Bekanntmachung des Hinweises auf die Patenterteilung: **04.05.2022**
(21) Anmeldenummer: 17808044.6
(22) Anmeldetag: 22.11.2017
(51) Int. Cl.: C09J 7/10, C09J 5/04, C09J 4/06

(54) **REAKTIVES 2-KOMPONENTENKLEBESYSTEM IN FILMFORM MIT VERBESSERTER FEUCHTWÄRMEBESTÄNDIGKEIT**
REACTIVE 2-COMPONENT ADHESIVE SYSTEM IN FILM FORM HAVING IMPROVED HEAT-AND-HUMIDITY RESISTANCE
SYSTÈME ADHÉSIF BI-COMPOSANT RÉACTIF SOUS FORME DE FILM PRÉSENTANT UNE MEILLEURE RÉSISTANCE À LA CHALEUR HUMIDE

(30) Priorität: 05.12.2016 DE 102016224169
(43) Veröffentlichungstag der Anmeldung: 09.10.2019
(73) Patentinhaber: TESA SE, 22848 Norderstedt (DE)
(72) Erfinder: SCHÜMANN, Uwe, 25421 Pinneberg (DE); PRADIER, Clementine, 69110 Sainte Foy Les Lyon (FR)
(74) Vertreter: tesa SE
(86) Internationale Anmeldenummer: PCT/EP2017/080026
(87) Internationale Veröffentlichungsnummer: WO 2018/104053

(56) Entgegenhaltungen:
- EP-A2- 0 313 071
- WO-A1-2014/202402
- DE-A1-102013 222 739
- GB-A- 1 077 083
- US-A1- 2015 024 218

## Beschreibung

### Technisches Gebiet der Erfindung

Die vorliegende Erfindung betrifft ein 2-Komponentenklebesystem in Filmform zur Verklebung von diversen Materialien, wie z.B. Metall, Holz, Glas und/oder Kunststoff. Dieses 2-Komponentenklebesystem umfasst zwei reaktive Klebstofffilme, die jeweils (a) eine polymere Filmbildner-Matrix und (b) mindestens ein reaktives Monomer oder Reaktivharz umfassen, wobei der erste Klebstofffilm zusätzlich mindestens einen Radikalinitiator enthält und der zweite Klebstofffilm zusätzlich mindestens einen Aktivator enthält und wobei das mindestens eine reaktive Monomer oder Reaktivharz eine stickstoffhaltige Vinylverbindung und/oder eine stickstoffhaltige, oligomere oder polymere Verbindung mit Kohlenstoff-Kohlenstoff-Doppelbindung(en) umfasst. Außerdem wird ein Verfahren zur Herstellung der erfindungsgemäßen reaktiven Klebstofffilme, wie oben beschrieben, und ein Kit zur Bereitstellung des erfindungsgemäßen, reaktiven Klebstofffilm-Systems, umfassend einen ersten und einen zweiten reaktiven Klebstofffilm, wie oben beschrieben, zur Verfügung gestellt.

### Allgemeiner Stand der Technik

2-Komponentenklebesysteme sind allgemein seit Jahren bekannt und in der Fachliteratur eingehend beschrieben. In diesen Systemen wird ein aus zwei Komponenten bestehendes Klebstoff-System auf die zu verklebenden Teile aufgetragen, wobei üblicherweise zwei flüssige Komponenten zum Einsatz kommen. Beispielsweise besteht bei chemisch reagierenden 2-Komponenten-Polymerisationsklebesystemen die eine Komponente aus dem zu polymerisierenden Monomer und einem Aktivator und die andere Komponente aus einer radikalbildenden Substanz (auch Härter oder Initiator genannt)und dem zu polymerisierenden Monomer. Nach Durchmischen oder zumindest Kontaktieren der beiden Komponenten und einer Aktivierung, die meist thermisch erfolgt, wird die radikalbildende Substanz durch den Aktivator in zwei Radikale aufgespalten und die Polymerisationsreaktion der zu polymerisierenden Monomere beginnt. Die Radikalkettenpolymerisation des Monomers findet anschließend bis zu einem Kettenabbruch statt und die Klebemasse härtet aus, wodurch eine dauerhafte Verklebung der zu verklebenden Teile erreicht wird.

Nachteil derartiger flüssiger 2-Komponenten-Polymerisations-Klebesysteme ist, dass ihre Anwendung oft unsauber erfolgt, da die beiden Komponenten meist flüssig bis pastös auf die zu verklebenden Teile aufgetragen werden müssen. Dies ist vor allem bei großflächigen Verklebungen und/oder bei solchen Anwendungen problematisch, bei denen die Oberflächen uneben, z.B. geneigt, sind. Außerdem erfolgt die Aktivierung des Klebstoffsystems in der Regel bei erhöhten Temperaturen, was für empfindliche Substrate, wie z.B. eloxiertes Aluminium, problematisch sein kann. Ein weiterer Nachteil derartiger Systeme ist, dass die Lagerstabilität der beiden Komponenten kritisch sein kann. Darüber hinaus gehen herkömmliche 2-Komponenten-Polymerisations-klebesysteme nach vollständigem Aushärten häufig mit Problemen einher, die erst bei Erschütterungen sichtbar werden. So kann es bei den Systemen des Standes der Technik im Bereich der Verklebungen durch starke Erschütterungen zu Rissen oder Brüchen kommen. Ebenso ist die Feuchtwärmebeständigkeit der Klebesysteme oft nicht optimal.

Aus der US 2015/024218 A1 ist ein photohärtbarer folienförmiger Klebstoff für optische Zwecke bekannt, wobei der Klebstoff eine Mischung aus einem Urethan(meth)acrylat-Oligomer mit einem gewichtsmittleren Molekulargewicht von 20.000 bis 100.000, aus einem Phenoxyharz mit einer Glasübergangstemperatur von 50 bis 120 °C, aus einem Photopolymerisationsinitiator und aus einem (Meth)acrylatmonomer umfasst.

Die EP 0 313 071 A2 offenbart eine reaktive selbsthaftende härtbare Klebstoffzusammensetzung, die wenigstens ein gesättigtes, bei Temperaturen bis zu 60 °C nicht fließfähiges Polyesterharz und wenigstens ein (Meth)acryl-urethanoligomer enthält.

Aus der WO 2014/202402 A1 ist ein reaktiver Klebstofffilm, umfassend (a) eine polymere Filmbildner-Matrix, (b) mindestens ein reaktives Monomer oder Reaktivharz und (c) ein Reagens, ausgewählt aus einem Initiator, insbesondere Radikalinitiator, oder einem Aktivator, bekannt.

Die GB 1 077 083 A offenbart ein Verfahren zum Verbinden von Gegenständen, umfassend das Bilden und Polymerisieren eines Films zwischen den Gegenständen, wobei der Film die Komponenten eines nichtwässrigen polymerisierbaren Systems enthält.

### Aufgabe der vorliegenden Erfindung

Der vorliegenden Erfindung liegt insofern die Aufgabe zu Grunde, ein verbessertes, reaktives 2-Komponentenklebesystem bereitzustellen. Vor diesem Hintergrund schlägt die vorliegende Erfindung ein reaktives 2-Komponentenklebesystem in Filmform zur Verklebung von diversen Materialien vor, um die oben beschriebenen Probleme der bekannten, flüssigen 2-Komponentenklebesysteme zu umgehen.

Insbesondere wird ein reaktives 2-Komponentenklebesystem in Filmform bereitgestellt, das einfach zu handhaben ist und idealerweise bereits eine Haftklebrigkeit aufweist, so dass es zu keinem Verrutschen bei der Applikation auf die zu verklebenden Substrate kommt und eine exaktere Verklebung als bei den flüssigen 2-Komponenten-Polymerisationsklebesystemen, die im Stand der Technik bekannt sind, ermöglicht wird.

Weiter insbesondere ist das reaktive 2-Komponentenklebesystem in Filmform der vorliegenden Erfindung dadurch gekennzeichnet, dass es eine verbesserte Feuchtwärmebeständigkeit aufweist.

### Zusammenfassung der Erfindung

Die vorliegende Erfindung betrifft ein reaktives Klebstofffilm-System, umfassend zwei reaktive Klebstofffilme, wobei der erste Klebstofffilm (a) eine polymere Filmbildner-Matrix, (b) mindestens ein reaktives Monomer oder Reaktivharz, wobei das mindestens eine reaktive Monomer oder das mindestens eine Reaktivharz N-Vinylcaprolactam und/oder N-Vinylpyrrolidon umfasst, und (c) mindestens einen Initiator, insbesondere Radikalinitiator umfasst und der zweite Klebstofffilm (a) eine polymere Filmbildner-Matrix, (b) mindestens ein reaktives Monomer oder Reaktivharz, wobei das mindestens eine reaktive Monomer oder das mindestens eine Reaktivharz N-Vinylcaprolactam und/oder N-Vinylpyrrolidon umfasst, und (c) mindestens einen Aktivator umfasst und wobei die beiden Klebstofffilme dadurch gekennzeichnet sind, dass sie N-Vinylcaprolactam und/oder N-Vinylpyrrolidon als reaktive Monomere oder Reaktivharze umfassen.

Dieses reaktive Klebstofffilm-System ist als 2-Komponenten-Polymerisationsklebesystem in Filmform zur verbesserten Verklebung von diversen Materialien mit hoher Feuchtwärmebeständigkeit geeignet.

### Detaillierte Beschreibung der Erfindung

Erfindungsgemäß wird die oben beschriebene Aufgabe über ein reaktives Klebstofffilm-System gelöst, das zwei reaktive Klebstofffilme umfasst. Dieses Klebstofffilm-System ist dadurch gekennzeichnet, dass der erste reaktive Klebstofffilm eine polymere Filmbildner-Matrix (a), mindestens ein reaktives Monomer oder Reaktivharz (b), wobei das mindestens eine reaktive Monomer oder das mindestens eine Reaktivharz N-Vinylcaprolactam und/oder N-Vinylpyrrolidon umfasst, sowie einen Initiator, insbesondere Radikalinitiator (c) umfasst und der zweite reaktive Klebstofffilm eine polymere Filmbildner-Matrix (a), mindestens ein reaktives Monomer oder Reaktivharz (b), wobei das mindestens eine reaktive Monomer oder das mindestens eine Reaktivharz N-Vinylcaprolactam und/oder N-Vinylpyrrolidon umfasst, sowie einen Aktivator (c) umfasst, wobei als das mindestens eine reaktive Monomer oder Reaktivharz N-Vinylcaprolactam und/oder N-Vinylpyrrolidon eingesetzt wird.

In einer erfindungsgemäßen Ausführungsform wird folglich ein reaktiver Klebstofffilm bereitgestellt, umfassend (a) eine polymere Filmbildner-Matrix, (b) mindestens ein reaktives Monomer oder Reaktivharz, wobei das mindestens eine reaktive Monomer oder das mindestens eine Reaktivharz N-Vinylcaprolactam und/oder N-Vinylpyrrolidon umfasst, und (c) ein Reagens, ausgewählt aus einem Initiator, insbesondere Radikalinitiator, oder einem Aktivator, wobei das mindestens eine reaktive Monomer oder Reaktivharz N-Vinylcaprolactam und/oder N-Vinylpyrrolidon umfasst.

In einer weiteren erfindungsgemäßen Ausführungsform wird ein reaktives Klebstofffilm-System, umfassend zwei reaktive Klebstofffilme A und B bereitgestellt, das dadurch gekennzeichnet ist, dass der erste reaktive Klebstofffilm A einen Initiator, insbesondere Radikalinitiator, enthält und der zweite reaktive Klebstofffilm B einen Aktivator enthält und das mindestens eine reaktive Monomer oder Reaktivharz N-Vinylcaprolactam und/oder N-Vinylpyrrolidon umfasst.

In einer weiteren erfindungsgemäßen Ausführungsform wird ein Verfahren zur Herstellung eines erfindungsgemäßen, reaktiven Klebstofffilms offenbart, wobei das Verfahren die folgenden Schritte umfasst:
1. Auflösen und/oder Feinverteilen der Inhaltsstoffe in einem oder mehreren Lösemittel(n) und/oder Wasser,
2. Mischen der aufgelösten oder feinverteilten Inhaltsstoffe,
3. Beschichten eines Trennliners oder -papiers, eines Trägermaterials oder eines Haftklebstoffs mit der Mischung aufgelöster oder verteilter Inhaltsstoffe nach Schritt 2,
4. Verdunsten des Lösemittels und/oder Wassers und
5. Gegebenenfalls Aufwickeln des reaktiven Klebstofffilms zu einer Rolle.
wobei die Inhaltsstoffe (a) eine polymere Filmbildner-Matrix, (b) mindestens ein reaktives Monomer oder Reaktivharz, wobei das mindestens eine reaktive Monomer oder das mindestens eine Reaktivharz N-Vinylcaprolactam und/oder N-Vinylpyrrolidon umfasst, und (c) ein Reagens, ausgewählt aus einem Initiator, insbesondere Radikalinitiator, oder einem Aktivator, umfassen.

Schritte 1. und 2. können auch in einem Schritt erfolgen, die Inhaltsstoffe also gleichzeitig aufgelöst und/oder feinverteilt werden.

In einer weiteren erfindungsgemäßen Ausführungsform wird ein Verfahren zur Herstellung eines erfindungsgemäßen, reaktiven Klebstofffilms offenbart, wobei das Verfahren lösungsmittel- und wasserfrei ist. Entsprechend werden Formulierungen für erfindungsgemäße, reaktive Klebstofffilme durch Einwirkung von Wärme und/oder Scherung z. B. in einem Hotmeltkneter oder Compoundierextruder hergestellt.

In einer anderen erfindungsgemäßen Ausführungsform wird ein Kit zur Bereitstellung eines Zweikomponenten-Klebstofffilm-Systems, umfassend (i) mindestens einen ersten reaktiven Klebstofffilm, der einen Initiator, insbesondere Radikalinitiator enthält, und (ii) mindestens einen zweiten reaktiven Klebstofffilm, der einen Aktivator enthält, offenbart.

In einer weiteren erfindungsgemäßen Ausführungsform wird ein Verbundkörper offenbart, der durch das erfindungsgemäße, reaktive Klebstofffilm-System oder durch das erfindungsgemäße Kit verbunden ist.

Nachfolgend werden die Komponenten der erfindungsgemäßen Klebstofffilme bzw. des erfindungsgemäßen Klebstofffilm-Systems im Detail beschrieben.

### Polymere Filmbildner-Matrix

Die erfindungsgemäßen Klebstofffilme bestehen grundsätzlich aus einer Matrix, die nachfolgend polymere Filmbildner-Matrix genannt wird, in der die reaktiven, zu polymerisierenden Monomere und/oder Reaktivharze enthalten sind. Aufgabe dieser Matrix ist ein inertes Grundgerüst für die reaktiven Monomere und/oder Klebharze zu bilden, so dass diese nicht - wie im Stand der Technik - flüssig vorliegen und damit die genannten Probleme auslösen können, sondern in einem Film oder einer Folie eingelagert sind. Auf diese Art und Weise wird eine einfachere Handhabung gewährleistet.

Inert bedeutet in diesem Zusammenhang, dass die reaktiven Monomere und/oder Reaktivharze unter geeignet gewählten Bedingungen (z. B. bei ausreichend geringen Temperaturen) im Wesentlichen nicht mit der polymeren Filmbildner-Matrix reagieren.

Geeignete Filmbildner-Matrices zur Verwendung in der vorliegenden Erfindung sind vorzugsweise ausgewählt aus der folgenden Liste: ein thermoplastisches Polymer, wie z.B. ein Polyester bzw. Copolyester, ein Polyamid bzw. Copolyamid, ein Polyacrylsäureester, ein Acrylsäureester-Copolymer, ein Polymethacrylsäureester, ein Methacrylsäureester-Copolymer, thermoplastische Polyurethane sowie chemisch oder physikalisch vernetzte Stoffe der zuvor genannten Verbindungen. Darüber hinaus können auch Blends aus verschiedenen thermoplastischen Polymeren eingesetzt werden.

Weiterhin sind auch Elastomere und thermoplastische Elastomere allein oder im Gemisch als polymere Filmbildner-Matrix denkbar. Bevorzugt werden thermoplastische Polymere, insbesondere semikristalline.

Besonders bevorzugt sind thermoplastische Polymere mit Erweichungstemperaturen kleiner als 100°C. In diesem Zusammenhang steht der Begriff Erweichungspunkt für die Temperatur, ab der das thermoplastische Granulat mit sich selbst verklebt. Wenn es sich bei dem Bestandteil der polymeren Filmbildner-Matrix um ein semikristallines thermoplastisches Polymer handelt, dann weist es neben seiner Erweichungstemperatur (die mit dem Schmelzen der Kristallite zusammenhängt) sehr bevorzugt eine Glasübergangstemperatur von höchstens 25 °C, bevorzugt höchstens 0 °C, auf.

In einer bevorzugten, erfindungsgemäßen Ausführungsform wird ein thermoplastisches Polyurethan eingesetzt. Vorzugsweise besitzt das thermoplastische Polyurethan eine Erweichungstemperatur von kleiner als 100°C, insbesondere kleiner als 80°C.

In einer besonders bevorzugten, erfindungsgemäßen Ausführungsform wird Desmomelt^{®} 530 als polymere Filmbildner-Matrix eingesetzt, das im Handel bei der Bayer Material Science AG, 51358 Leverkusen, Deutschland, erhältlich ist. Desmomelt^{®} 530 ist ein hydroxyl-terminiertes, weitgehend lineares, thermoplastisches, stark kristallisierendes Polyurethan-Elastomer.

Die Menge der polymeren Filmbildner-Matrix liegt erfindungsgemäß im Bereich von etwa 10 bis 90 Gew.%, bevorzugt etwa 20 bis 50 Gew.%, bezogen auf die Gesamtmischung der Bestandteile des reaktiven Klebstofffilms. Stärker bevorzugt werden 25 bis 45 Gew.%, am stärksten bevorzugt etwa 30 bis 40 Gew.%, der polymeren Filmbildner-Matrix, bezogen auf die Gesamtmischung der Bestandteile des reaktiven Klebstofffilms, eingesetzt. Die Gesamtmischung der Bestandteile des reaktiven Klebstofffilms steht hier für die gesamte Menge der eingesetzten polymeren Filmbildner-Matrix (a), der reaktiven Monomere oder Reaktivharze (b), des Reagens (c) sowie weiterer optional vorliegender Komponenten, die als Summe (in Gew.%) erhalten wird.

### Reaktives Monomer oder Reaktivharz

Wie hierin verwendet, soll das reaktive Monomer oder Reaktivharz für ein Monomer oder Harz stehen, das insbesondere zu einer Radikalkettenpolymerisation in der Lage ist.

Das mindestens eine reaktive Monomer oder Reaktivharz ist ausgewählt aus: N-Vinylcaprolactam (CAS-Nr. 2235-00-9) und/oder N-Vinylpyrrolidon (CAS-Nr. 88-12-0).

Zudem können neben N-Vinylcaprolactam und/oder N-Vinylpyrrolidon, wie oben beschrieben, ein oder mehrere Vertreter, ausgewählt aus der folgenden Gruppe vorliegen: Methylmethacrylat (CAS-Nr. 80-62-6), Methacrylsäure (CAS-Nr. 79-41-4), Cyclohexylmethacrylat (CAS-Nr. 101-43-9), Tetrahydrofurfuryl-methacrylat (CAS-Nr. 2455-24-5), 2-Phenoxyethylmethacrylat (CAS-Nr. 10595-06-9), Hydroxyalkylmethacrylate, 2-Hydroxyethylmethacrylat (CAS-Nr. 868-77-9), 2-Hydroxypropylmethacrylat (CAS-Nr. 923-26-2 und 27813-02-1), 4-Hydroxybutylmethacrylat (CAS-Nr. 29008-35-3 und 997-46-6), Di-(ethylenglykol)methylethermethacrylat (CAS-Nr. 45103-58-0) und/oder Ethylenglykoldimethacrylat (CAS-Nr. 97-90-5).

In einer besonders bevorzugten, erfindungsgemäßen Ausführungsform enthält der reaktive Klebstofffilm eine Mischung von 2-Phenoxyethylmethacrylat, 2-Hydroxyethylmethacrylat, 2-Hydroxypropylmethacrylat, N-Vinylcaprolactam und Ethylenglykoldimethacrylat als zu polymerisierende, reaktive Monomere.

Zudem können weitere Reaktivharz(e) vorliegen, wie z. B. oligomere mono-, di-, tri- und höher funktionalisierte (Meth)acrylate. Sehr vorteilhaft werden diese im Gemisch mit zumindest einem reaktiven Monomer, wie oben beschrieben, eingesetzt.

Jede dieser bevorzugten Ausführungsformen kann erfindungsgemäß mit einem thermoplastischen Polyurethan, wie z.B. Desmomelt^{®} 530, als polymere Filmbildner-Matrix kombiniert werden.

Die Menge des reaktiven Monomers/der reaktiven Monomere/des Reaktivharzes/der Reaktivharze liegt erfindungsgemäß im Bereich von etwa 10-90 Gew.%, bevorzugt etwa 40-70 Gew.%, bezogen auf die Gesamtmischung der Bestandteile des reaktiven Klebstofffilms. Am stärksten bevorzugt werden etwa 45-65 Gew.% des reaktiven Monomers/der reaktiven Monomere/des Reaktivharzes/der Reaktivharze, bezogen auf die Gesamtmischung der Bestandteile des reaktiven Klebstofffilms, eingesetzt. Die Gesamtmischung der Bestandteile des reaktiven Klebstofffilms steht hier für die gesamte Menge der eingesetzten polymeren Filmbildner-Matrix (a), der reaktiven Monomere oder Reaktivharze (b), des Reagens (c) sowie weiterer optional vorliegender Komponenten, die als Summe (in Gew.%) erhalten wird.

### Initiator, insbesondere Radikalinitiator

Wie hierin verwendet, steht der Begriff Initiator, insbesondere Radikalinitiator bzw. radikalbildende Substanz (oder auch Härter), für eine Verbindung, die eine Polymerisationsreaktion oder Vernetzung des Klebstoffs einleiten kann. Der Initiator, insbesondere Radikalinitiator, nimmt allerdings zu einem sehr geringen Anteil am Reaktionsgeschehen teil und bildet folglich keinen die Eigenschaften der Verklebung bestimmenden Polymeranteil.

In der vorliegenden Erfindung wird dem mindestens einen ersten, reaktiven Klebstofffilm des Klebstofffilm-Systems ein Initiator, insbesondere Radikalinitiator, zugesetzt.

Bevorzugt werden Radikalinitiatoren. Es können alle im Stand der Technik bekannten Radikalinitiatoren eingesetzt werden. Bevorzugte Radikalinitiatoren sind Peroxide, Hydroperoxide und Azoverbindungen.

In einer besonders bevorzugten, erfindungsgemäßen Ausführungsform ist der Radikalinitiator ein organisches Peroxid. Besonders bevorzugt sind Hydroperoxide, insbesondere α,α- Dimethylbenzylhydroperoxid, das auch als Cumolhydroperoxid (CAS-Nr. 80-15-9) bekannt ist. Weiterhin bevorzugt sind Diisopropylbenzol-hydroperoxid (CAS-Nr. 26762-93-6), p-Menthanhydroperoxid (CAS-Nr. 26762-92-5), tert.-Amyl-hydroperoxid (CAS-Nr. 3425-61-4) sowie 1,1,3,3-Tetramethylbutyl-hydroperoxid (CAS-Nr. 5809-08-5).

Die Menge des Radikalinitiators liegt erfindungsgemäß im Bereich von etwa 1 bis 20 Gew.%, bevorzugt etwa 5 bis 15 Gew.%, bezogen auf die Gesamtmischung der Bestandteile des reaktiven Klebstofffilms. Am stärksten bevorzugt werden etwa 8 bis 12 Gew.% Radikalinitiator, bezogen auf die Gesamtmischung der Bestandteile des reaktiven Klebstofffilms, eingesetzt. Die Gesamtmischung der Bestandteile des reaktiven Klebstofffilms steht hier für die gesamte Menge der eingesetzten polymeren Filmbildner-Matrix (a), der reaktiven Monomere oder Reaktivharze (b), des Reagens (c) sowie weiterer optional vorliegender Komponenten, die als Summe (in Gew.%) erhalten wird.

### Aktivator

Wie hier verwendet, steht der Begriff Aktivator für eine Verbindung, die bereits bei sehr geringen Konzentrationen den Ablauf der Polymerisation erst ermöglicht oder beschleunigt. Aktivatoren können auch Beschleuniger oder Akzeleratoren genannt werden.

In der vorliegenden Erfindung wird dem mindestens einen zweiten, reaktiven Klebstofffilm des Klebstofffilm-Systems ein Aktivator zugesetzt.

Geeignete Aktivatoren zur Verwendung in der vorliegenden Erfindung, wenn ein radikalisch polymerisierbares System aktiviert werden soll, sind beispielsweise ausgewählt aus der Gruppe, bestehend aus: einem Amin, einem Dihydropyridin-Derivat, einem Übergangsmetallsalz oder einem Übergangsmetallkomplex. Insbesondere werden tertiäre Amine und/oder Übergangsmetallkomplexe zur Aktivierung der radikalbildenden Substanz eingesetzt.

In einer erfindungsgemäßen Ausführungsform ist der Aktivator 3,5-Diethyl-1,2-dihydro-1-phenyl-2-propylpyridin (auch PDHP genannt, CAS-Nr. 34562-31-7).

In einer weiteren erfindungsgemäßen Ausführungsform wird eine Komplexverbindung mit einem Mangan-, Eisen- oder Kobalt-Ion als Zentralatom und einer Kohlenstoff-Stickstoff-Doppelbindungen enthaltenden Verbindung als Liganden eingesetzt. Die Kohlenstoff-Stickstoff-Doppelbindungen enthaltende Verbindung liegt dabei in der Komplexverbindung anionisch vor. Das Mangan-, Eisen- oder Kobalt-Ion ist in der Komplexverbindung zweifach positiv geladen, während die Kohlenstoff-Stickstoff-Doppelbindungen enthaltende Verbindung zweifach negativ geladen ist. Das Mangan-, Eisen- oder Kobalt-Ion ersetzt in der Komplexverbindung jeweils zwei Wasserstoff-Atome, die der Ligand vor der Umsetzung zur Komplexverbindung an den Stickstoff-Atomen getragen hat.

In einer bevorzugten, erfindungsgemäßen Ausführungsform hat der Ligand eine cyclische Struktur, bevorzugt eine
Porphyrin-, Porphyrazin- oder Phthalocyanin-Ringstruktur. Diese Strukturen sind als Gerüststrukturen zu verstehen. Die Liganden können gegebenenfalls Substituenten anstelle der an Kohlenstoff-Atome gebundenen H-Atome tragen. In diesem Fall spricht man von Derivaten dieser Verbindungen. Geeignete Substituenten sind ausgewählt aus der Gruppe, bestehend aus Fluor, Chlor, Brom, Iod, Methyl, Ethyl, Propyl, Isopropyl, Butyl, tert.-Butyl, -OH, -NH₂, -NO₂.

Ein besonders geeigneter Aktivator umfasst Mangan(II)-phthalocyanin (CAS-Nr. 14325-24-7), Eisen(II)-phthalocyanin (CAS-Nr. 132-16-1) oder Kobalt(II)-phthalocyanin (CAS-Nr. 3317-67-7). Am bevorzugtesten wird Eisen(II)-phthalocyanin (CAS-Nr. 132-16-1) als Aktivator eingesetzt.

Die Menge des Aktivators liegt erfindungsgemäß im Bereich von größer 0 bis etwa 10 Gew.%, bevorzugt etwa 0,1-5,0 Gew.%. Am stärksten bevorzugt werden etwa 0,2-3,0 Gew.%, noch bevorzugter 0,5-2,0 Gew.% Aktivator, bezogen auf die Gesamtmischung der Bestandteile der reaktiven Klebstoffkomponente, eingesetzt. Die Gesamtmischung der Bestandteile des reaktiven Klebstofffilms steht hier für die gesamte Menge der eingesetzten polymeren Filmbildner-Matrix (a), der reaktiven Monomere oder Reaktivharze (b), des Reagens (c) sowie weiterer optional vorliegender Komponenten, die als Summe (in Gew.%) erhalten wird.

### Vernetzer

Wie hier verwendet, steht der Begriff Vernetzer für chemische Verbindungen, die imstande sind, lineare Molekülketten mit reaktionsfähigen, funktionellen Gruppen zu versehen, damit sich aus den zweidimensionalen Strukturen über Ausbildung intermolekularer Brücken dreidimensional-vernetzte Strukturen bilden können.

Typische Beispiele für Vernetzer sind chemische Verbindungen, die innerhalb des Moleküls oder an den beiden Molekülenden zwei oder mehr gleiche oder unterschiedliche funktionelle Gruppen aufweisen und folglich Moleküle gleicher oder auch unterschiedlicher Strukturen miteinander vernetzen können. Im Gegensatz zum Aktivator, wie oben beschrieben, wird ein Vernetzer in das Polymer-Netzwerk eingebaut.

In einer besonders bevorzugten, erfindungsgemäßen Ausführungsform wird Ethylenglykoldimethacrylat (CAS-Nr. 97-90-5) als Vernetzer und/oder zusätzliches reaktives Monomer neben N-Vinylcaprolactam und/oder N-Vinylpyrrolidon, wie oben beschrieben, eingesetzt (siehe oben).

Bevorzugte Vernetzer sind außerdem Diacrylate, Dimethacrylate, Triacrylate, Trimethacrylate, höher funktionelle Acrylate und/oder höher funktionelle Methacrylate.

### Weitere Bestandteile des reaktiven Klebstofffilms

Die reaktiven Klebstofffilme der vorliegenden Erfindung können gegebenenfalls weitere Additive und/oder Hilfsstoffe enthalten, die im Stand der Technik bekannt sind. Hier sind beispielsweise Füllstoffe, Farbstoffe, Keimbildner, rheologische Additive, Blähmittel, klebverstärkende Additive (Haftvermittler, Tackifier-Harze), Compoundierungsmittel, Weichmacher und/oder Alterungs-, Licht- und UV-Schutzmittel, zum Beispiel in Form von primären und sekundären Antioxidantien zu nennen.

### Reaktiver Klebstofffilm

Wie hierin verwendet, soll der Begriff "Klebstofffilm" (oder auch Klebstoffschicht oder Klebstofffolie) eine vollständig oder nicht-vollständig bereitgestellte Auftragung der jeweiligen Komponentenmischung, wie nachfolgend beschrieben, umfassen. So kann beispielsweise eine punktförmige Auftragung der Klebstoffkomponenten, die die zu verklebende Substratoberfläche(n) nicht vollständig bedeckt, ebenfalls zu einer dauerhaften Verklebung im Sinne der vorliegenden Erfindung führen.

In einer bevorzugten, erfindungsgemäßen Ausführungsform umfasst der mindestens eine erste Klebstofffilm A eine Mischung der folgenden Bestandteile: thermoplastisches Polyurethan, insbesondere Desmomelt^{®} 530, 2-Phenoxyethylmethacrylat, 2-Hydroxyethylmethacrylat, 2-Hydroxypropylmethacrylat, N-Vinylcaprolactam, Ethylenglykoldimethacrylat und Cumolhydroperoxid.

Jede der bevorzugten, erfindungsgemäßen Ausführungsformen enthält etwa 10 bis 90 Gew. % thermoplastisches Polyurethan, etwa 10 bis 90 Gew. % reaktive(s) Monomer(e) und etwa 1 bis 20 Gew. % Cumolhydroperoxid, vorzugsweise etwa 20 bis 50 Gew. % thermoplastisches Polyurethan, etwa 40 bis 70 Gew. % reaktive Monomere und etwa 5 bis 15 Gew. % Cumolhydroperoxid, bezogen auf die Gesamtmischung der Bestandteile des reaktiven Klebstofffilms.

In einer bevorzugten, erfindungsgemäßen Ausführungsform umfasst der mindestens eine zweite Klebstofffilm B eine Mischung der folgenden Bestandteile: thermoplastisches Polyurethan, insbesondere Desmomelt^{®}530, 2-Phenoxyethylmethacrylat, 2-Hydroxyethylmethacrylat, 2-Hydroxypropylmethacrylat, N-Vinylcaprolactam, Ethylenglykoldimethacrylat und Eisen(II)-phthalocyanin.

Jede der bevorzugten, erfindungsgemäßen Ausführungsformen enthält etwa 10 bis 90 Gew. % thermoplastisches Polyurethan, etwa 10 bis 90 Gew. % reaktive(s) Monomer(e) und größer 0 bis etwa 10 Gew. % Eisen(II)-phthalocyanin, vorzugsweise etwa 20 bis 50 Gew. % thermoplastisches Polyurethan, etwa 40 bis 70 Gew. % reaktive(s) Monomer(e) und etwa 0,1 bis 5 Gew. % Eisen(II)-phthalocyanin, bezogen auf die Gesamtmischung der Bestandteile des reaktiven Klebstofffilms.

Wie hierin verwendet, bezieht sich die Gesamtmischung der Bestandteile des reaktiven Klebstofffilms auf die gesamte Menge der eingesetzten polymeren Filmbildner-Matrix A, der/des reaktiven Monomere/Monomers und oder der/des Reaktiveharze/Reaktivharzes B, des Reagens (c) sowie weiterer optional vorliegender Komponenten, die als Summe (in Gew.%) erhalten wird.

Der reaktive Klebstofffilm der Erfindung besitzt in der Regel eine Schichtdicke im Bereich von etwa 20 bis 200 µm, bevorzugt etwa 30 bis 100 µm, bevorzugter etwa 40 bis 60 µm und besonders bevorzugt etwa 50 µm. Zur Herstellung größerer Schichtdicken kann es von Vorteil sein, mehrere Klebstofffilmschichten zusammen zu laminieren.

Zudem ist der erfindungsgemäße, reaktive Klebstofffilm dadurch gekennzeichnet, dass er bevorzugt haftklebrige Eigenschaften besitzt. Als haftklebrige Stoffe sind gemäß Römpp solche viskoelastischen Klebstoffe definiert (Römpp Online 2013, Dokumentkennung RD-08-00162), deren abgebundener, trockener Film bei Raumtemperatur permanent klebrig ist und klebfähig bleibt. Die Haftklebung erfolgt durch leichten Anpressdruck sofort auf fast allen Substraten. Als leichter Anpressdruck ist hier ein Anpressdruck von größer 0 bar, der für eine Dauer von größer 0 Sekunden ausgeübt wird, gemeint.

### Reaktives Klebstofffilm-System

Erfindungsgemäß werden der erste und der zweite reaktive Klebstofffilme, wie oben beschrieben, für ein reaktives Klebstofffilm-System eingesetzt, welches dadurch gekennzeichnet ist, dass der erste reaktive Klebstofffilm A, neben der Filmbildner-Matrix A und mindestens einem reaktiven Monomer oder Reaktivharz B, einen Initiator, insbesondere Radikalinitiator, enthält und der zweite reaktive Klebstoff, neben der Filmbildner-Matrix A und mindestens einem reaktiven Monomer oder Reaktivharz B, einen Aktivator enthält und als das mindestens eine reaktive Monomer oder Reaktivharz N-Vinylcaprolactam und/oder N-Vinylpyrrolidon verwendet wird. Bevorzugt wird zudem Eisen(II)-phthalocyanin als Aktivator eingesetzt.

Außerdem wird erfindungsgemäß ein reaktives Klebstofffilm-System bereitgestellt, umfassend zwei oder mehrere reaktive Klebstofffilme, wie oben definiert, dadurch gekennzeichnet, dass ein erster reaktiver Klebstofffilm A einen Initiator, insbesondere Radikalinitiator enthält und ein zweiter reaktiver Klebstofffilm B einen Aktivator enthält und diese beiden reaktiven Klebstofffilme A und B jeweils abwechselnd vorliegen.

Die erste und die zweite reaktive Klebstoffkomponente A und B vernetzen und härten aus, sobald sie unter mäßigem Druck, insbesondere 0,5 bis 3 bar, bei Raumtemperatur (23°C) flächig in Kontakt gebracht werden. Wahlweise sind höhere bzw. niedrigere Temperaturen auch möglich. Der genannte mäßige Druck soll insbesondere von Hand zu erreichen sein. Die Kontaktzeit beträgt erfindungsgemäß bei Raumtemperatur einige Sekunden bis einige Minuten, bevorzugt 10 bis 60 Sekunden. Der Druck kann maschinell oder manuell aufgebracht werden.

Werden die beiden reaktiven Klebstoffkomponenten A und B, wie oben beschrieben, zuvor auf den zu verklebenden Substraten aufgebracht, kommt durch die oben beschriebene Vernetzung eine dauerhafte Verklebung der Substrate zu Stande. Alternativ kann zunächst auch Klebstoffkomponente A auf das erste zu verklebende Substrat aufgebracht und auf Klebstoffkomponente A Klebstoffkomponente B aufgebracht werden. Anschließend wird dann das zweite zu verklebende Substrat auf Klebstoffkomponente B aufgebracht.

Weiterhin kann das reaktive Klebstoffsystem der Erfindung weitere Filme, Schichten, Klebstoffe sowie permanente und oder temporäre Träger umfassen.

Geeignete Trägermaterialien sind einem Fachmann auf dem Gebiet bekannt. Beispielsweise können als permanente Träger Folien (Polyester, PET, PE, PP, BOPP, PVC, Polyimide), Vliese, Schäume, Gewebe und/oder Gewebefolien verwendet werden. Temporäre Träger sollten mit einer Trennschicht versehen sein, wobei die Trennschicht in der Regel aus einem Silikontrennlack oder einem fluorierten Trennlack besteht oder polyolefinischen Charakter (HDPE, LDPE) aufweist.

Gegebenenfalls kann es notwendig sein, dass die Oberflächen der zu verklebenden Substrate durch ein physikalisches, chemisches und/oder physikalisch-chemisches Verfahren vorbehandelt werden. Hier ist beispielsweise das Aufbringen eines Primers oder einer Haftvermittlerzusammensetzung vorteilhaft.

### Substrate

Geeignete Substrate, die zur Verklebung über das erfindungsgemäße, reaktive Klebstofffilm-System geeignet sind, sind Metalle, Glas, Holz, Beton, Stein, Keramik, Textil und/oder Kunststoffe. Die zu verklebenden Substrate können gleich oder verschieden sein.

In einer bevorzugten Ausführungsform wird das erfindungsgemäße, reaktive Klebstofffilm-System zur Verklebung von Metallen, Glas und Kunststoffen eingesetzt. In einer besonders bevorzugten, erfindungsgemäßen Ausführungsform werden Polycarbonate und eloxiertes Aluminium verklebt.

Die zu verklebenden Metallsubstrate können generell aus allen geläufigen Metallen und Metalllegierungen gefertigt werden. Bevorzugt kommen Metalle, wie zum Beispiel Aluminium, Edelstahl, Stahl, Magnesium, Zink, Nickel, Messing, Kupfer, Titan, eisenhaltige Metalle und Legierungen zum Einsatz. Die zu verklebenden Teile können außerdem aus unterschiedlichen Metallen aufgebaut sein.

Geeignete Kunststoffsubstrate sind beispielsweise Acrylnitril-Butadien-Styrol-Copolymere (ABS), Polycarbonate (PC), ABS/PC-Blends, PMMA, Polyamide, Glasfaserverstärkte Polyamide, Polyvinylchlorid, Polyvinylenfluorid, Cellulose Acetat, Cycloolefin-Copolymere, Flüssigkristallpolymere (LCP), Polylactid, Polyetherketone, Polyetherimid, Polyethersulfon, Polymethacrylmethylimid, Polymethylpenten, Polyphenylether, Polyphenylensulfid, Polyphthalamid, Polyurethane, Polyvinylacetat, Styrol Acrylnitril Copolymere, Polyacrylate bzw. Polymethacrylate, Polyoxymethylen, Acrylester-Styrol-Acrylnitril Copolymere, Polyethylen, Polystyrol, Polypropylen und/oder Polyester, wie z.B. Polybutylenterephthalate (PBT) und/oder Polyethylenterephthalat (PET).

Substrate können lackiert, bedruckt, bedampft oder besputtert sein.

Die zu verklebenden Substrate können jede beliebige Form annehmen, die für die Verwendung des resultierenden Verbundkörpers erforderlich ist. In der einfachsten Form sind die Substrate eben. Außerdem können auch dreidimensionale Substrate, die z.B. geneigt sind, mit dem erfindungsgemäßen, reaktiven Klebstofffilm-System verklebt werden. Die zu verklebenden Substrate können auch die verschiedensten Funktionen einnehmen, wie zum Beispiel Gehäuse, Sichtfenster, Versteifungselemente, etc.

### Verfahren zur Herstellung eines reaktiven Klebstofffilms

Die erfindungsgemäßen, reaktiven Klebstofffilme werden durch das nachfolgend beschriebene Verfahren hergestellt:
In einem ersten Schritt werden die Inhaltsstoffe in einem oder mehreren Lösemittel(n) und/oder Wasser gelöst bzw. fein verteilt. Alternativ ist kein Lösemittel und/oder Wasser notwendig, da die Inhaltsstoffe bereits vollständig ineinander löslich sind (ggf. unter Einwirkung von Wärme und/oder Scherung). Geeignete Lösemittel sind im Stand der Technik bekannt, wobei bevorzugt Lösemittel eingesetzt werden, in denen mindestens einer der Inhaltsstoffe eine gute Löslichkeit aufweist. Besonders bevorzugt ist Aceton.

Wie hierin verwendet, umfasst der Begriff Inhaltsstoff die polymere Filmbildner-Matrix, mindestens ein reaktives Monomer oder Reaktivharz, ein Reagens, ausgewählt aus einem Initiator, insbesondere Radikalinitiator oder einem Aktivator, sowie gegebenenfalls weitere Additive und/oder Hilfsstoffe, wie oben definiert.

Anschließend werden die aufgelösten oder fein verteilten Inhaltsstoffe in einem zweiten Schritt vermischt. Zur Herstellung der Mischung werden übliche Rührgeräte eingesetzt. Gegebenenfalls wird die Lösung zudem erwärmt. Ggf. werden die Inhaltsstoffe gleichzeitig aufgelöst bzw. feinverteilt und vermischt.

Daraufhin wird in einem dritten Schritt ein Trennpapier, ein Trägermaterial oder ein Haftklebstoff mit der Mischung der aufgelösten bzw. fein verteilten Inhaltsstoffe nach Schritt 2 beschichtet. Die Beschichtung erfolgt nach den üblichen Techniken, die im Stand der Technik bekannt sind.

Nach der Beschichtung wird das Lösemittel in einem vierten Schritt durch Abdampfen entfernt.

Gegebenenfalls kann der reaktive Klebstofffilm in einem weiteren Schritt zu einer Rolle aufgewickelt werden.

Zur Lagerung werden die erfindungsgemäßen, reaktiven Klebstofffilme mit einem Trennliner oder -papier abgedeckt.

Alternativ werden die erfindungsgemäßen, reaktiven Klebstofffilme lösungsmittelfrei durch Extrusion, Hotmeltdüsenbeschichtung oder Kalandrieren hergestellt.

### Kit zur Bereitstellung eines erfindungsgemäßen 2-Komponentenklebesystems in Filmform

Außerdem wird erfindungsgemäß ein Kit zur Bereitstellung eines reaktiven 2-Komponentenklebesystems in Filmform bereitgestellt. Dieses Kit umfasst mindestens einen ersten reaktiven Klebstofffilm A, der einen Initiator, insbesondere Radikalinitiator, enthält, wie oben beschrieben, und mindestens einen zweiten reaktiven Klebstofffilm B, der einen Aktivator enthält, wie oben beschrieben.

Typischerweise wird das erfindungsgemäße Kit wie folgt verwendet:
Die mindestens eine erste Klebstoffkomponente A wird auf eine Oberfläche eines zu verklebenden Substrats aufgebracht. Außerdem wird die mindestens eine zweite Klebstoffkomponente B auf eine Oberfläche eines zweiten zu verklebenden Substrats aufgebracht. Klebstoffkomponente A und Klebstoffkomponente B werden in Kontakt gebracht und über Verpresszeiten im Bereich von einigen Sekunden bis zu mehreren Minuten bei Raumtemperatur (23°C) in Kontakt gelassen, wodurch die Polymerisationsreaktion startet und der Klebstoff aushärtet. Alternativ kann die mindestens eine zweite Klebstoffkomponente B auch auf die erste Klebstoffkomponente A aufgebracht werden und erst anschließend die Oberfläche eines zweiten zu verklebenden Substrats darauf aufgebracht werden.

Gegebenenfalls kann das oben beschriebene Verfahren wiederholt werden, um so eine Verklebung der Schichten Substrat-A-B-A-B-Substrat oder Substrat-B-A-B-Substrat oder Substrat-A-B-A-Substrat, etc. zu erreichen. Dies kann vorteilhaft sein, wenn unterschiedliche ausgeprägte Hafteigenschaften zwischen den zu verklebenden Substraten und den ersten und zweiten Klebstoffkomponenten A und B gegeben sind.

### Verbundkörper

Zuletzt wird erfindungsgemäß ein Verbundkörper bereitgestellt, der durch das erfindungsgemäße, reaktive Klebstofffilm-System, wie oben definiert, oder durch das erfindungsgemäße Kit, wie oben definiert, verbunden ist.

### Experimenteller Teil

Die nachfolgenden Beispiele dienen zur Verdeutlichung der vorliegenden Erfindung, sollen aber keinesfalls als Einschränkung des Schutzbereichs verstanden werden.

### Herstellung einer Lösung der Filmbildner-Matrix

### PU-Lösung:

Eine 20%ige acetonische Lösung des filmbildenden Polymers wird hergestellt, indem zunächst 120 g Desmomelt^{®} 530 und 480 g Aceton in ein Schraubglas eingewogen werden und das Schraubglas verschlossen wird. Durch mehrtägiges Rollen des Schraubglases auf einer Rollbank wird das Desmomelt^{®} 530 vollständig in Lösung gebracht. Je nach Rollgeschwindigkeit dauert der Vorgang etwa ein bis sieben Tage. Alternativ kann die acetonische Lösung auch durch Rühren des Desmomelt^{®} 530-Granulats in Aceton mit einem handelsüblichen Laborrührer hergestellt werden.

### Beispiel 1

### Herstellung des ersten reaktiven, haftklebrigen Klebstofffilms A, umfassend einen Radikalinitiator

150,0 g der 20%igen acetonischen Lösung von Desmomelt^{®} 530 (PU-Lösung)werden mit 23,2 g 2-Phenoxyethylmethacrylat, 16,7 g 2-Hydroxyethylmethacrylat, 11,1 g 2-Hydroxypropylmethacrylat, 7,0 g N-Vinylcaprolactam, 3,0 g Ethylenglykoldimethacrylat und 10,0 g Peroxan CU-90 L (90%ige Lösung von Cumolhydroperoxid in Cumol, Firma Pergan) mit einem handelsüblichen Laborrührer 30 Minuten gemischt.

Die erhaltene homogene Mischung wird mit Hilfe eines handelsüblichen Laborstreichtisches (zum Beispiel von der Firma SMO (Sondermaschinen Oschersleben GmbH)) mit einem Streichmesser auf einer silikonisierten Polyesterfolie (Trennliner) ausgestrichen. Anschließend wird das Aceton bei 60°C im Umlufttrockenschrank 10 Minuten abgedampft. Die Spaltbreite beim Ausstreichen wird so eingestellt, dass nach dem Abdampfen des Lösemittels ein 50 µm dicker Film erhalten wird. Der erhaltene haftklebrige Film A wird bis zur Verklebung mit einer zweiten silikonisierten Polyesterfolie abgedeckt und aufbewahrt.

### Herstellung des zweiten reaktiven, haftklebrigen Klebstofffilms B, umfassend einen Aktivator

150,0 g der 20%igen acetonischen Lösung von Desmomelt^{®} 530 (PU-Lösung) werden mit 26,2 g 2-Phenoxyethylmethacrylat, 19,7 g 2-Hydroxyethylmethacrylat, 13,1 g 2-Hydroxypropylmethacrylat, 7,0 g N-Vinylcaprolactam, 3,0 g Ethylenglykoldimethacrylat und 1,0 g Eisen(II)-phthalocyanin (Qualität: Sigma-Aldrich, Reinheit ca. 90%) mit einem handelsüblichen Laborrührer 30 Minuten gemischt, so dass eine Mischung mit gelösten Anteilen entsteht.

Die erhaltene Mischung wird mit Hilfe eines handelsüblichen Laborstreichtisches mit einem Streichmesser auf einer silikonisierten Polyesterfolie (Trennliner) ausgestrichen. Anschließend wird das Aceton bei 60°C im Umlufttrockenschrank 10 Minuten abgedampft. Die Spaltbreite beim Ausstreichen wird so eingestellt, dass nach dem Abdampfen des Lösemittels ein 50 µm dicker Film erhalten wird. Der erhaltene haftklebrige Film B wird bis zur Verklebung mit einer zweiten silikonisierten Polyesterfolie abgedeckt und aufbewahrt.

Die prozentualen Zusammensetzungen der Filme A und B sowie der vorausgegangenen Lösungen sind in der folgenden Tabelle zusammen mit den beschriebenen Einwaagen aufgeführt:

### Beispiel 1, Lösung und Film A

| | **Beispiel 1, Lösung und Film A** | | |
|---|---|---|---|
| | Gew.% Feststoff* | Einwaage (g) mit Lösemittel | Gew.% mit Lösemittel |
| PU- Lösung (20 Gew.% Desmomelt^{®} 530 in Aceton) | 30,0 | 150,0 | 67,87 |
| 2-Phenoxyethylmethacrylat | 23,2 | 23,2 | 10,49 |
| 2-Hydroxyethylmethacrylat | 16,7 | 16,7 | 7,54 |
| 2-Hydroxypropylmethacrylat | 11,1 | 11,1 | 5,04 |
| n-Vinylcaprolactam | 7,0 | 7,0 | 3,17 |
| Ethylenglykoldimethacrylat | 3,0 | 3,0 | 1,36 |
| Peroxan^{®} CU 90 L** | 9,0 | 10,0 | 4,52 |
| | | | |
| Summe | 100,0 | 221,0 | 100,00 |

| | | | |
|---|---|---|---|
| * Unter Feststoff werden hier alle Stoffe verstanden, die nicht Lösemittel sind. Lösemittel sind hier Aceton und Cumol. ** 90 gew.%ige Lösung von Cumolhydroperoxid in Cumol, Fa. Pergan | | | |

### Beispiel 1, Lösung und Film B

| | Beispiel 1, Lösung und Film B | | |
|---|---|---|---|
| | Gew.% Feststoff* | Einwaage (g) mit Lösemittel | Gew.% mit Lösemittel |
| PU- Lösung (20 Gew.% Desmomelt^{®} 530 in Aceton) | 30,0 | 150,0 | 68,18 |
| 2-Phenoxyethylmethacrylat | 26,2 | 26,2 | 11,91 |
| 2-Hydroxyethylmethacrylat | 19,7 | 19,7 | 8,97 |
| 2-Hydroxypropylmethacrylat | 13,1 | 13,1 | 5,93 |
| n-Vinylcaprolactam | 7,0 | 7,0 | 3,18 |
| Ethylenglykoldimethacrylat | 3,0 | 3,0 | 1,36 |
| Eisen(II)-phthalocyanin | 1,0 | 1,0 | 0,45 |
| | | | |
| Summe | 100,0 | 220,0 | 100,00 |

| | | | |
|---|---|---|---|
| * Unter Feststoff werden hier alle Stoffe verstanden, die nicht Lösemittel sind. Lösemittel ist hier Aceton. | | | |

In analoger Weise wie in Beispiel 1 werden die Lösungen und Filme A und B der weiteren Beispiele und Vergleichsbeispiele hergestellt.

Die folgenden Tabellen geben Auskunft über die Zusammensetzungen der Lösungen und Filme A und B in den weiteren Beispielen und Vergleichsbeispielen.

### Beispiel 2, Lösung und Film A

| | Beispiel 2, Lösung und Film A | | |
|---|---|---|---|
| | Gew.% Feststoff* | Einwaage (g) mit Lösemittel | Gew.% mit Lösemittel |
| PU- Lösung (20 Gew.% Desmomelt^{®} 530 in Aceton) | 30,0 | 150,0 | 67,87 |
| 2-Phenoxyethylmethacrylat | 18,2 | 18,2 | 8,23 |
| 2-Hydroxyethylmethacrylat | 16,7 | 16,7 | 7,54 |
| 2-Hydroxypropylmethacrylat | 11,1 | 11,1 | 5,04 |
| N-Vinylcaprolactam | 12,0 | 12,0 | 5,43 |
| Ethylenglykoldimethacrylat | 3,0 | 3,0 | 1,36 |
| Peroxan^{®} CU 90 L** | 9,0 | 10,0 | 4,52 |
| | | | |
| Summe | 100,0 | 221,0 | 100,00 |

| | | | |
|---|---|---|---|
| * Unter Feststoff werden hier alle Stoffe verstanden, die nicht Lösemittel sind. Lösemittel sind hier Aceton und Cumol. ** 90 gew.%ige Lösung von Cumolhydroperoxid in Cumol, Fa. Pergan | | | |

### Beispiel 2, Lösung und Film B

| | Beispiel 2, Lösung und Film B | | |
|---|---|---|---|
| | Gew.% Feststoff* | Einwaage (g) mit Lösemittel | Gew.% mit Lösemittel |
| PU- Lösung (20 Gew.% Desmomelt^{®} 530 in Aceton) | 30,0 | 150,0 | 68,19 |
| 2-Phenoxyethylmethacrylat | 21,2 | 21,2 | 9,64 |
| 2-Hydroxyethylmethacrylat | 19,7 | 19,7 | 8,97 |
| 2-Hydroxypropylmethacrylat | 13,1 | 13,1 | 5,93 |
| N-Vinylcaprolactam | 12,0 | 12,0 | 5,46 |
| Ethylenglykoldimethacrylat | 3,0 | 3,0 | 1,36 |
| Eisen(II)-phthalocyanin | 1,0 | 1,0 | 0,45 |
| | | | |
| Summe | 100,0 | 220,0 | 100,00 |

| | | | |
|---|---|---|---|
| * Unter Feststoff werden hier alle Stoffe verstanden, die nicht Lösemittel sind. Lösemittel ist hier Aceton. | | | |

### Beispiel 3, Lösung und Film A

| | Beispiel 3, Lösung und Film A | | |
|---|---|---|---|
| | Gew.% Feststoff* | Einwaage (g) mit Lösemittel | Gew.% mit Lösemittel |
| PU- Lösung (20 Gew.% Desmomelt^{®} 530 in Aceton) | 30,0 | 150,0 | 67,87 |
| 2-Phenoxyethylmethacrylat | 23,2 | 23,2 | 10,49 |
| 2-Hydroxyethylmethacrylat | 16,7 | 16,7 | 7,54 |
| 2-Hydroxypropylmethacrylat | 11,1 | 11,1 | 5,04 |
| N-Vinylpyrrolidon | 7,0 | 7,0 | 3,17 |
| Ethylenglykoldimethacrylat | 3,0 | 3,0 | 1,36 |
| Peroxan^{®} CU 90 L** | 9,0 | 10,0 | 4,52 |
| | | | |
| Summe | 100,0 | 221,0 | 100,00 |

| | | | |
|---|---|---|---|
| * Unter Feststoff werden hier alle Stoffe verstanden, die nicht Lösemittel sind. Lösemittel sind hier Aceton und Cumol. ** 90 gew.%ige Lösung von Cumolhydroperoxid in Cumol, Fa. Pergan | | | |

### Beispiel 3, Lösung und Film B

| | Beispiel 3, Lösung und Film B | | |
|---|---|---|---|
| | Gew.% Feststoff* | Einwaage (g) mit Lösemittel | Gew.% mit Lösemittel |
| PU- Lösung (20 Gew.% Desmomelt^{®} 530 in Aceton) | 30,0 | 150,0 | 68,18 |
| 2-Phenoxyethylmethacrylat | 26,2 | 26,2 | 11,91 |
| 2-Hydroxyethylmethacrylat | 19,7 | 19,7 | 8,97 |
| 2-Hydroxypropylmethacrylat | 13,1 | 13,1 | 5,93 |
| N-Vinylcaprolactam | 7,0 | 7,0 | 3,18 |
| Ethylenglykoldimethacrylat | 3,0 | 3,0 | 1,36 |
| Eisen(II)-phthalocyanin | 1,0 | 1,0 | 0,45 |
| | | | |
| Summe | 100,0 | 220,0 | 100,00 |

| | | | |
|---|---|---|---|
| * Unter Feststoff werden hier alle Stoffe verstanden, die nicht Lösemittel sind. Lösemittel ist hier Aceton. | | | |

### Beispiel 4, Lösung und Film A

| | Beispiel 4, Lösung und Film A | | |
|---|---|---|---|
| | Gew.% Feststoff* | Einwaage (g) mit Lösemittel | Gew.% mit Lösemittel |
| PU- Lösung (20 Gew.% Desmomelt^{®} 530 in Aceton) | 30,0 | 150,0 | 66,66 |
| 2-Phenoxyethylmethacrylat | 27,2 | 27,2 | 12,09 |
| 2-Hydroxyethylmethacrylat | 16,7 | 16,7 | 7,41 |
| 2-Hydroxypropylmethacrylat | 11,1 | 11,1 | 4,95 |
| N-Vinylcaprolactam | 7,0 | 7,0 | 3,11 |
| Ethylenglykoldimethacrylat | 3,0 | 3,0 | 1,33 |
| Peroxan^{®} IHP-50** | 5,0 | 10,0 | 4,44 |
| | | | |
| Summe | 100,0 | 225,0 | 100,00 |

| | | | |
|---|---|---|---|
| * Unter Feststoff werden hier alle Stoffe verstanden, die nicht Lösemittel sind. Lösemittel sind hier Aceton und Diisopropylbenzol. ** 50 gew.%ige Lösung von Diisopropylhydroperoxid in Diisopropylbenzol, Fa. Pergan | | | |

### Beispiel 4, Lösung und Film B

| | Beispiel 4, Lösung und Film B | | |
|---|---|---|---|
| | Gew.% Feststoff* | Einwaage (g) mit Lösemittel | Gew.% mit Lösemittel |
| PU- Lösung (20 Gew.% Desmomelt^{®} 530 in Aceton) | 30,0 | 150,0 | 68,18 |
| 2-Phenoxyethylmethacrylat | 26,2 | 26,2 | 11,91 |
| 2-Hydroxyethylmethacrylat | 19,7 | 19,7 | 8,97 |
| 2-Hydroxypropylmethacrylat | 13,1 | 13,1 | 5,93 |
| N-Vinylcaprolactam | 7,0 | 7,0 | 3,18 |
| Ethylenglykoldimethacrylat | 3,0 | 3,0 | 1,36 |
| Eisen(II)-phthalocyanin | 1,0 | 1,0 | 0,45 |
| | | | |
| Summe | 100,0 | 220,0 | 100,00 |

| | | | |
|---|---|---|---|
| * Unter Feststoff werden hier alle Stoffe verstanden, die nicht Lösemittel sind. Lösemittel ist hier Aceton. | | | |

### Beispiel 5, Lösung und Film A

| | Beispiel 5, Lösung und Film A | | |
|---|---|---|---|
| | Gew.% Feststoff* | Einwaage (g) mit Lösemittel | Gew.% mit Lösemittel |
| PU- Lösung (20 Gew.% Desmomelt^{®} 530 in Aceton) | 40,0 | 200,0 | 76,63 |
| 2-Phenoxyethylmethacrylat | 18,0 | 18,0 | 6,90 |
| 2-Hydroxyethylmethacrylat | 13,0 | 13,0 | 4,98 |
| 2-Hydroxypropylmethacrylat | 10,0 | 10,0 | 3,83 |
| N-Vinylcaprolactam | 7,0 | 7,0 | 2,68 |
| Ethylenglykoldimethacrylat | 3,0 | 3,0 | 1,15 |
| Peroxan^{®} CU 90 L** | 9,0 | 10,0 | 3,83 |
| | | | |
| Summe | 100,0 | 261,0 | 100,00 |

| | | | |
|---|---|---|---|
| * Unter Feststoff werden hier alle Stoffe verstanden, die nicht Lösemittel sind. Lösemittel sind hier Aceton und Cumol. ** 90 gew.%ige Lösung von Cumolhydroperoxid in Cumol, Fa. Pergan | | | |

### Beispiel 5, Lösung und Film B

| | Beispiel 5, Lösung und Film B | | |
|---|---|---|---|
| | Gew.% Feststoff* | Einwaage (g) mit Lösemittel | Gew.% mit Lösemittel |
| PU- Lösung (20 Gew.% Desmomelt^{®} 530 in Aceton) | 40,0 | 200,0 | 76,92 |
| 2-Phenoxyethylmethacrylat | 22,0 | 22,0 | 8,46 |
| 2-Hydroxyethylmethacrylat | 17,0 | 17,0 | 6,54 |
| 2-Hydroxypropylmethacrylat | 10,0 | 10,0 | 3,85 |
| N-Vinylcaprolactam | 7,0 | 7,0 | 2,69 |
| Ethylenglykoldimethacrylat | 3,0 | 3,0 | 1,15 |
| Eisen(II)-phthalocyanin | 1,0 | 1,0 | 0,38 |
| | | | |
| Summe | 100,0 | 260,0 | 100,00 |

| | | | |
|---|---|---|---|
| * Unter Feststoff werden hier alle Stoffe verstanden, die nicht Lösemittel sind. Lösemittel ist hier Aceton. | | | |

### Vergleichsbeispiel 1, Lösung und Film A

| | Vergleichsbeispiel 1, Lösung und Film A | | |
|---|---|---|---|
| | Gew.% Feststoff* | Einwaage (g) mit Lösemittel | Gew.% mit Lösemittel |
| PU- Lösung (20 Gew.% Desmomelt^{®} 530 in Aceton) | 30,0 | 150,0 | 67,87 |
| 2-Phenoxyethylmethacrylat | 26,8 | 26,8 | 12,13 |
| 2-Hydroxyethylmethacrylat | 18,5 | 18,5 | 8,37 |
| 2-Hydroxypropylmethacrylat | 12,5 | 12,5 | 5,66 |
| Ethylenglykoldimethacrylat | 3,2 | 3,2 | 1,45 |
| Peroxan^{®} CU 90 L** | 9,0 | 10,0 | 4,52 |
| | | | |
| Summe | 100,0 | 221,0 | 100,00 |

| | | | |
|---|---|---|---|
| * Unter Feststoff werden hier alle Stoffe verstanden, die nicht Lösemittel sind. Lösemittel sind hier Aceton und Cumol. ** 90 gew.%ige Lösung von Cumolhydroperoxid in Cumol, Fa. Pergan | | | |

### Vergleichsbeispiel 1, Lösung und Film B

| | Verggleichsbeispiel 1, Lösung und Film B | | |
|---|---|---|---|
| | Gew.% Feststoff* | Einwaage (g) mit Lösemittel | Gew.% mit Lösemittel |
| PU- Lösung (20 Gew.% Desmomelt^{®} 530 in Aceton) | 30,0 | 150,0 | 68,18 |
| 2-Phenoxyethylmethacrylat | 30,0 | 30,0 | 13,64 |
| 2-Hydroxyethylmethacrylat | 21,3 | 21,3 | 9,68 |
| 2-Hydroxypropylmethacrylat | 14,5 | 14,5 | 6,59 |
| Ethylenglykoldimethacrylat | 3,2 | 3,2 | 1,45 |
| Eisen(II)-phthalocyanin | 1,0 | 1,0 | 0,45 |
| | | | |
| Summe | 100,0 | 220,0 | 100,00 |

| | | | |
|---|---|---|---|
| * Unter Feststoff werden hier alle Stoffe verstanden, die nicht Lösemittel sind. Lösemittel ist hier Aceton. | | | |

### Vergleichsbeispiel 2, Lösung und Film A

| | Vergleichsbeispiel 2, Lösung und Film A | | |
|---|---|---|---|
| | Gew.% Feststoff* | Einwaage (g) mit Lösemittel | Gew.% mit Lösemittel |
| PU- Lösung (20 Gew.% Desmomelt^{®} 530 in Aceton) | 30,0 | 150,0 | 66,67 |
| 2-Phenoxyethylmethacrylat | 30,8 | 30,8 | 13,69 |
| 2-Hydroxyethylmethacrylat | 19,0 | 19,0 | 8,44 |
| 2-Hydroxypropylmethacrylat | 12,0 | 12,0 | 5,33 |
| Ethylenglykoldimethacrylat | 3,2 | 3,2 | 1,42 |
| Peroxan^{®} IHP-50** | 5,0 | 10,0 | 4,44 |
| | | | |
| Summe | 100,0 | 225,0 | 100,00 |

| | | | |
|---|---|---|---|
| * Unter Feststoff werden hier alle Stoffe verstanden, die nicht Lösemittel sind. Lösemittel sind hier Aceton und Diisopropylbenzol. ** 50 gew.%ige Lösung von Diisopropylhydroperoxid in Diisopropylbenzol, Fa. Pergan | | | |

### Vergleichsbeispiel 2, Lösung und Film B

| | Vergleichsbeispiel 2, Lösung und Film B | | |
|---|---|---|---|
| | Gew.% Feststoff* | Einwaage (g) mit Lösemittel | Gew.% mit Lösemittel |
| PU- Lösung (20 Gew.% Desmomelt^{®} 530 in Aceton) | 30,0 | 150,0 | 68,18 |
| 2-Phenoxyethylmethacrylat | 32,8 | 32,8 | 14,91 |
| 2-Hydroxyethylmethacrylat | 20,0 | 20,0 | 9,09 |
| 2-Hydroxypropylmethacrylat | 13,0 | 13,0 | 5,91 |
| Ethylenglykoldimethacrylat | 3,2 | 3,2 | 1,45 |
| Eisen(II)-phthalocyanin | 1,0 | 1,0 | 0,45 |
| | | | |
| Summe | 100,0 | 220,0 | 100,00 |

| | | | |
|---|---|---|---|
| * Unter Feststoff werden hier alle Stoffe verstanden, die nicht Lösemittel sind. Lösemittel ist hier Aceton. | | | |

### Vergleichsbeispiel 3, Lösung und Film A

| | Vergleichsbeispiel 3, Lösung und Film A | | |
|---|---|---|---|
| | Gew.% Feststoff* | Einwaage (g) mit Lösemittel | Gew.% mit Lösemittel |
| PU- Lösung (20 Gew.% Desmomelt^{®} 530 in Aceton) | 40,0 | 200,0 | 76,63 |
| 2-Phenoxyethylmethacrylat | 21,3 | 21,3 | 8,16 |
| 2-Hydroxyethylmethacrylat | 15,5 | 15,5 | 5,94 |
| 2-Hydroxypropylmethacrylat | 11,0 | 11,0 | 4,21 |
| Ethylenglykoldimethacrylat | 3,2 | 3,2 | 1,23 |
| Peroxan^{®} CU 90 L** | 9,0 | 10,0 | 3,83 |
| | | | |
| Summe | 100,0 | 261,0 | 100,00 |

| | | | |
|---|---|---|---|
| * Unter Feststoff werden hier alle Stoffe verstanden, die nicht Lösemittel sind. Lösemittel sind hier Aceton und Cumol. ** 90 gew.%ige Lösung von Cumolhydroperoxid in Cumol, Fa. Pergan | | | |

### Vergleichsbeispiel 3, Lösung und Film B

| | Verggleichsbeispiel 3, Lösung und Film B | | |
|---|---|---|---|
| | Gew.% Feststoff* | Einwaage (g) mit Lösemittel | Gew.% mit Lösemittel |
| PU- Lösung (20 Gew.% Desmomelt^{®} 530 in Aceton) | 40,0 | 200,0 | 76,92 |
| 2-Phenoxyethylmethacrylat | 25,1 | 25,1 | 9,65 |
| 2-Hydroxyethylmethacrylat | 18,7 | 18,7 | 7,19 |
| 2-Hydroxypropylmethacrylat | 12,0 | 12,0 | 4,62 |
| Ethylenglykoldimethacrylat | 3,2 | 3,2 | 1,23 |
| Eisen(II)-phthalocyanin | 1,0 | 1,0 | 0,38 |
| | | | |
| Summe | 100,0 | 260,0 | 100,00 |

| | | | |
|---|---|---|---|
| * Unter Feststoff werden hier alle Stoffe verstanden, die nicht Lösemittel sind. Lösemittel ist hier Aceton. | | | |

### Push Out-Test

Der Push-out-Test ermöglicht Aussagen über die Verklebungsfestigkeit eines doppelseitig klebenden Klebeprodukts in Richtung der Klebschichtnormalen.

### Probenvorbereitung für den Push-Out-Test

Aus den zu untersuchenden Klebstofffilmen A und B, die beidseitig jeweils mit einem Trennliner abgedeckt waren, wurden runde Stanzlinge mit einem Durchmesser von 21 mm ausgestanzt. Die Trennliner wurden daraufhin jeweils von einer Seite eines Stanzlings abgezogen. Die Stanzlinge A wurden passgenau jeweils auf eine runde Probenscheibe aus Polycarbonat ("Disc", erstes Substrat, erster Prüfkörper) mit ebenfalls einem Durchmesser von 21 mm aufgelegt. Die Stanzlinge A hafteten nun jeweils an der "Disc". Anschließend wurde das noch auf den Stanzlingen verbliebene Trennpapier abgezogen. Die Discs waren somit nun mit den Klebstofffilmen A ausgerüstet.

Die Stanzlinge der Klebstofffilme B wurden mit der nicht abgedeckten Seite jeweils auf den auf der Disc haftenden Stanzling A gelegt, so dass die Stanzlinge B jeweils auf den Stanzlingen A hafteten. Nach dem In-Kontakt-bringen der Stanzlinge A mit den Stanzlingen B muss die anschließende Verklebung mit dem zweiten Substrat innerhalb von maximal einer Stunde erfolgen, da die Härtungsreaktion nun voranschreitet.

Zur weiteren Vorbereitung der Verklebungen wurden jeweils die letzten noch auf den Stanzlingen B verbliebenen Trennliner abgezogen, so dass die Stanzlinge B jeweils offen lagen.

### Verklebung für den Push-Out-Test

Das zweite Substrat (zweiter Prüfkörper) war eine quadratische Lochplatte, die aus eloxiertem Aluminium bestand. Die Seitenlängen betrugen jeweils 40 mm. Das Loch war jeweils zentral angeordnet und rund, der Lochdurchmesser betrug 9 mm.

Die mit den aneinander haftendenden Stanzlingen A und B ausgerüsteten runden Probenkörper wurden mit der jeweils offen liegenden Seite der Stanzlinge derart auf der Lochplatte positioniert, dass das Zentrum des runden Probenkörpers und das Zentrum des Lochs der Lochplatte übereinander lagen. Anschließend wurde der durch die Haftklebrigkeit der Stanzlinge zusammengehaltene Verbund aus quadratischer Lochplatte, Stanzling A, Stanzling B und der Disc so auf einen Tisch gelegt, dass die quadratische Lochplatte unten lag. Auf die Disc wurde ein Gewicht von 2 kg gestellt. Der Verbund wurde dem permanenten Druck des Gewichtes a) 60 Sekunden und b) 120 Sekunden (Verpresszeit) jeweils bei 23°C und in einer zweiten Messreihe bei 80°C (Verpresstemperatur) ausgesetzt. Sodann wurde das Gewicht entfernt. Der Verbund wurde anschließend 48 Stunden bei 23°C und 50% relativer Luftfeuchtigkeit gelagert. Dabei kam es zu einer allmählich voranschreitenden Härtungsreaktion innerhalb der Stanzlinge und zu einer sich allmählich verstärkenden Haftung zwischen den Stanzlingen sowie zu den Substraten (Prüfkörpern). Es kam somit zu einer Verklebung mit einer allmählichen Festigkeitszunahme über die Zeit.

Die somit fertig verklebten Verbunde wurden anschließend unterschiedlich gelagert:
Lagerung 1: 72 Stunden (= 3 Tage) bei 23 °C und 50 % relativer Luftfeuchtigkeit
Lagerung 2: 72 Stunden (= 3 Tage) bei 65 °C und 90 % relativer Luftfeuchtigkeit

Nach einer Rekonditionierung von 24 Stunden bei 23 °C und 50 % relativer Luftfeuchtigkeit erfolgten die Push-Out-Tests.

### Durchführung des Push Out-Tests

Es wurde mittels eines in eine Zugprüfmaschine gespannten Dorns durch das Loch in der Lochplatte mit einer konstanten Geschwindigkeit von 10 mm/min senkrecht auf den runden Prüfkörper ("Disc") gedrückt (also parallel zum Normalenvektor auf die Prüfkörper-Ebene; mittig auf die Lochmitte zentriert), bis die Verklebung sich soweit löste, dass ein Druckabfall von 50 % registriert wurde. Der unmittelbar vor dem Druckabfall einwirkende Druck ist der Maximaldruck Pₘₐₓ. Dieser Wert entspricht dem in der Tabelle angegeben Push Out-Wert [N/mm²]. Alle Messungen wurden in einem klimatisierten Raum bei 23 °C und 50 % relativer Luftfeuchte durchgeführt.

### Ergebnisse

### Push-Out-Test

| Verklebte Substrate | Eloxiertes Aluminium gegen Polycarbonat | | | | | | | |
|---|---|---|---|---|---|---|---|---|
| Verpresstemperatur | 23 °C | | | | 80 °C | | | |
| Verpresszeit | 60 sec | | 120 sec | | 60 sec | | 120 sec | |
| Lagerbedingungen | Lagerung 1 3d / 23°C, 50 % rel. Feuchte | Lagerung 2 3d / 65°C, 90 % rel. Feuchte | Lagerung 1 3d / 23°C, 50 % rel. Feuchte | Lagerung 2 3d / 65°C, 90 % rel. Feuchte | Lagerung 1 3d / 23°C, 50 % rel. Feuchte | Lagerung 2 3d / 65°C, 90 % rel. Feuchte | Lagerung 1 3d / 23°C, 50 % rel. Feuchte | Lagerung 2 3d / 65°C, 90 % rel. Feuchte |
| | | | | | | | | |
| Beispiel 1 | 2,1 (A) | 4,7 (A+K) | 2,3 (A) | 4,4 (K) | 3,2 (A+K) | 4,6 (A+K) | 2,7 (A) | 5,1 (A+K) |
| Beispiel 2 | 2,5 (A) | 5,2 (K) | 2,4 (A) | 4,8 (K) | 3,4 (A) | 5,2 (K) | 3,5 (A+K) | 5,3 (A+K) |
| Beispiel 3 | 1,9 (A) | 4,3 (K) | 2,1 (A) | 4,4 (A+K) | 2,8 (A) | 4,3 (A+K) | 3,0 (A+K) | 5,1 (K) |
| Beispiel 4 | 2,3 (A) | 4,8 (A+K) | 2,0 (A) | 3,9 (A+K) | 2,9 (A) | 5,2 (K) | 3,3 (A+K) | 5,1 (A+K) |
| Beispiel 5 | 2,2 (A) | 4,6 (A+K) | 2,5 (A) | 4,9 (K) | 3,1 (A+K) | 4,9 (A+K) | 3,2 (A+K) | 4,6 (A+K) |
| | | | | | | | | |
| Vergleichsbeispiel 1 | 1,5 (A) | 1,3 (A) | 1,7 (A) | 1,5 (A) | 1,9 (A) | 1,5 (A) | 2,0 (A) | 1,7 (A) |
| Vergleichsbeispiel 2 | 1,4 (A) | 1,0 (A) | 1,5 (A) | 1,4 (A) | 1,9 (A) | 1,7 (A) | 1,8 (A) | 1,5 (A) |
| Vergleichsbeispiel 3 | 1,3 (A) | 1,1 (A) | 1,7 (A) | 1,5 (A) | 1,9 (A) | 1,5 (A) | 2,0 (A) | 1,7 (A) |

Alle Angaben zu den Push-Out-Ergebnissen in der Tabelle in [N/mm²]

### Diskussion der Ergebnisse

Es sind hohe Klebfestigkeiten im Push-Out-Test, insbesondere nach einer Feuchtwärmelagerung (72 bei 65 °C und 90 % relative Feuchte) der verklebten Substrate erzielbar. Die erzielten Werte der Verklebungen von anodisiertem Aluminium gegen Polycarbonat liegen zwischen 3,9 und 5,3 N/mm². Die entsprechenden Ergebnisse der Vergleichsbeispiele liegen zwischen 1,0 und 1,7 N/mm². Weiterhin sind die Verklebungsfestigkeiten nach einer Feuchtwärmelagerung stets höher als nach Lagerung unter Normalbedingungen. Auch in diesem Punkt unterscheiden sich die Ergebnisse von den Ergebnissen der Vergleichsbeispiele.

Diese Ergebnisse verdeutlichen, dass mit dem erfindungsgemäßen, reaktiven Klebstoffsystem verklebte Substrate (Prüfkörper) Feuchtwärmebedingungen ausgesetzt sein können. Unter diesen Bedingungen tritt kein Verlust an Klebfestigkeit ein, sondern die Klebfestigkeit nimmt überraschenderweise sogar zu. Weiterhin kann festgestellt werden, dass mit dem erfindungsgemäßen, reaktiven Klebstoffsystem bereits bei Raumtemperatur nach kurzer Verpresszeit Substrate mit einer Festigkeit verklebt werden können, die über die Festigkeit typischer Haftklebstoffe deutlich hinausgeht.

Insgesamt ermöglicht das erfindungsgemäße Klebesystem in Filmform also eine verbesserte Verklebung bei gleichzeitig verbesserter Anwendbarkeit, insbesondere eine verbesserte Feuchtwärmebeständigkeit. Ein Vermischen zweier Komponenten vor der Verklebung ist nicht erforderlich.

## Patentansprüche

1. Reaktiver Klebstofffilm, umfassend (a) eine polymere Filmbildner-Matrix, (b) mindestens ein reaktives Monomer oder Reaktivharz und (c) ein Reagens, ausgewählt aus einem Initiator, insbesondere Radikalinitiator, oder einem Aktivator, **dadurch gekennzeichnet, dass**
das mindestens eine reaktive Monomer oder Reaktivharz N-Vinylcaprolactam und/oder N-Vinylpyrrolidon umfasst.

2. Reaktiver Klebstofffilm nach Anspruch 1, **dadurch gekennzeichnet, dass** zusätzlich zu N-Vinylcaprolactam und/oder N-Vinylpyrrolidon mindestens ein Vertreter, ausgewählt aus Acrylsäure, Acrylsäureestern, Methacrylsäure, Methacrylsäureestern, vorzugsweise Methylmethacrylat, Methacrylsäure, Cyclohexylmethacrylat, Tetrahydrofurfurylmethacrylat, 2-Phenoxyethylmethacrylat, 2-Hydroxyethylmethacrylat, 2-Hydroxypropylmethacrylat, 4-Hydroxybutylmethacrylat, einem Hydroxybutylmethacrylat-Isomerengemisch, Di(ethylenglykol)methylethermethacrylat und/oder Ethylenglykoldimethacrylat, vorliegt.

3. Reaktiver Klebstofffilm nach einem der vorhergehenden Ansprüche, **dadurch gekennzeichnet, dass**
die polymere Filmbildner-Matrix ein thermoplastisches Polymer, vorzugsweise ein thermoplastisches Polyurethan, oder ein Elastomer oder ein thermoplastisches Elastomer umfasst.

4. Reaktiver Klebstofffilm nach einem der vorhergehenden Ansprüche, **dadurch gekennzeichnet, dass**
der Radikalinitiator ein Peroxid, vorzugsweise ein Hydroperoxid, besonders bevorzugt Dimethylbenzylhydroperoxidumfasst.

5. Reaktiver Klebstofffilm nach einem der vorhergehenden Ansprüche, **dadurch gekennzeichnet, dass**
der Aktivator ein Amin, ein Dihydropyridin-Derivat, ein Übergangsmetallsalz oder ein Übergangsmetallkomplex, vorzugsweise Eisen(II)-phthalocyanin, umfasst.

6. Reaktiver Klebstofffilm nach einem der vorhergehenden Ansprüche, **dadurch gekennzeichnet, dass**
er haftklebrige Eigenschaften besitzt.

7. Reaktiver Klebstofffilm nach einem der vorhergehenden Ansprüche, umfassend
(I) 10 bis 90 Gew. % polymere Filmbildner-Matrix, 10 bis 90 Gew. % mindestens eines reaktiven Monomers oder Reaktivharzes, wobei das mindestens eine reaktive Monomer oder das mindestens eine Reaktivharz N-Vinylcaprolactam und/oder N-Vinylpyrrolidon umfasst, und 1 bis 20 Gew. % Radikalinitiator, vorzugsweise 20 bis 50 Gew. % polymere Filmbildner-Matrix, 40 bis 70 Gew. % mindestens eines reaktiven Monomers oder Reaktivharzes und 5 bis 15 Gew. % Radikalinitiator; oder
(II) 10 bis 90 Gew. % polymere Filmbildner-Matrix, 10 bis 90 Gew. % mindestens eines reaktiven Monomers oder Reaktivharzes, wobei das mindestens eine reaktive Monomer oder das mindestens eine Reaktivharz N-Vinylcaprolactam und/oder N-Vinylpyrrolidon umfasst, und größer 0 bis 10 Gew. % Aktivator, vorzugsweise 20 bis 50 Gew. % polymere Filmbildner-Matrix, 40 bis 70 Gew. % mindestens eines reaktiven Monomers oder Reaktivharzes und 0,1 bis 5 Gew. % Aktivator.

8. Reaktives Klebstofffilm-System, umfassend zwei reaktive Klebstofffilme nach einem der vorhergehenden Ansprüche, **dadurch gekennzeichnet, dass**
der erste reaktive Klebstofffilm einen Radikalinitiator enthält und der zweite reaktive Klebstofffilm einen Aktivator enthält.

9. Reaktives Klebstofffilm-System, umfassend zwei oder mehrere reaktive Klebstofffilme nach einem der Ansprüche 1 bis 7, **dadurch gekennzeichnet, dass**
ein erster reaktiver Klebstofffilm einen Radikalinitiator enthält und ein zweiter reaktiver Klebstofffilm einen Aktivator enthält und diese beiden reaktiven Klebstofffilme jeweils abwechselnd vorliegen.

10. Reaktives Klebstofffilm-System nach Anspruch 8 oder 9, umfassend weitere Filme, Schichten, Klebstoffe, Träger, Trennpapier und/oder Trennliner.

11. Verwendung eines reaktiven Klebstofffilms nach einem der Ansprüche 1 bis 7 und/oder eines reaktiven Klebstofffilm-Systems nach einem der Ansprüche 8 bis 10 zur Verklebung von Materialien aus Metall, Holz, Glas und/oder Kunststoffen.

12. Verfahren zur Herstellung eines reaktiven Klebstofffilms nach einem der Ansprüche 1 bis 7, wobei das Verfahren die folgenden Schritte umfasst:
1. Auflösen und/oder Feinverteilen der Inhaltsstoffe in einem oder mehreren Lösemittel(n) und/oder Wasser,
2. Mischen der aufgelösten oder feinverteilten Inhaltsstoffe,
3. Beschichten eines Trennliners oder -papiers, eines Trägermaterials oder eines Haftklebstoffs mit der Mischung aufgelöster oder verteilter Inhaltsstoffe nach Schritt 2,
4. Verdunsten des Lösemittels und/oder Wassers und
5. Gegebenenfalls Aufwickeln des reaktiven Klebstofffilms zu einer Rolle,
wobei die Inhaltsstoffe (a) eine polymere Filmbildner-Matrix, (b) mindestens ein reaktives Monomer oder Reaktivharz, wobei das mindestens eine reaktive Monomer oder das mindestens eine Reaktivharz N-Vinylcaprolactam und/oder N-Vinylpyrrolidon umfasst, (c) ein Reagens, ausgewählt aus einem Initiator, insbesondere Radikalinitiator, oder einem Aktivator, sowie gegebenenfalls weitere Additive und/oder Hilfsstoffe umfassen.

13. Kit zur Bereitstellung eines Zweikomponenten-Klebstofffilm-Systems, umfassend
(i) mindestens einen ersten reaktiven Klebstofffilm nach einem der Ansprüche 1 bis 7, der einen Radikalinitiator enthält, und
(ii) mindestens einen zweiten reaktiven Klebstofffilm nach einem der Ansprüche 1 bis 7, der einen Aktivator enthält.

14. Verbundkörper, der durch das reaktive Klebstofffilm-System nach einem der Ansprüche 8 bis 10 oder durch das Kit nach Anspruch 13 verbunden ist.

## Claims

1. Reactive adhesive film, comprising (a) a polymeric film-forming matrix, (b) at least one reactive monomer or reactive resin and (c) a reagent selected from an initiator, in particular a radical initiator, or an activator, **characterized in that**
the at least one reactive monomer or reactive resin comprises N-vinylcaprolactam and/or N-vinylpyrrolidone.

2. Reactive adhesive film according to Claim 1, **characterized in that** additionally to N-vinylcaprolactam and/or N-vinylpyrrolidone there is at least one representative selected from acrylic acid, acrylic acid esters, methacrylic acid, methacrylic acid esters, preferably methyl methacrylate, methacrylic acid, cyclohexyl methacrylate, tetrahydrofurfuryl methacrylate, 2-phenoxyethyl methacrylate, 2-hydroxyethyl methacrylate, 2-hydroxypropyl methacrylate, 4-hydroxybutyl methacrylate, a hydroxybutyl methacrylate isomer mixture, di(ethylene glycol)methyl ether methacrylate and/or ethylene glycol dimethacrylate.

3. Reactive adhesive film according to one of the preceding claims, **characterized in that**
the polymeric film-forming matrix comprises a thermoplastic polymer, preferably a thermoplastic polyurethane, or an elastomer or a thermoplastic elastomer.

4. Reactive adhesive film according to one of the preceding claims, **characterized in that**
the radical initiator comprises a peroxide, preferably a hydroperoxide, particularly preferably dimethylbenzyl hydroperoxide.

5. Reactive adhesive film according to one of the preceding claims, **characterized in that**
the activator comprises an amine, a dihydropyridine derivative, a transition metal salt or a transition metal complex, preferably iron(II) phthalocyanine.

6. Reactive adhesive film according to one of the preceding claims, **characterized in that**
it has properties of pressure sensitive adhesion.

7. Reactive adhesive film according to one of the preceding claims, comprising
(I) from 10 to 90% by weight of polymeric film-forming matrix, from 10 to 90% by weight of at least one reactive monomer or reactive resin, where the at least one reactive monomer or the at least one reactive resin comprises N-vinylcaprolactam and/or N-vinylpyrrolidone, and from 1 to 20% by weight of radical initiator, preferably from 20 to 50% by weight of polymeric film-forming matrix, from 40 to 70% by weight of at least one reactive monomer or reactive resin and from 5 to 15% by weight of radical initiator; or
(II) from 10 to 90% by weight of polymeric film-forming matrix, from 10 to 90% by weight of at least one reactive monomer or reactive resin, where the at least one reactive monomer or the at least one reactive resin comprises N-vinylcaprolactam and/or N-vinylpyrrolidone, and from greater than 0 to 10% by weight of activator, preferably from 20 to 50% by weight of polymeric film-forming matrix, from 40 to 70% by weight of at least one reactive monomer or reactive resin and from 0.1 to 5% by weight of activator.

8. Reactive adhesive film system comprising two reactive adhesive films according to one of the preceding claims, **characterized in that**
the first reactive adhesive film comprises a radical initiator and the second reactive adhesive film comprises an activator.

9. Reactive adhesive film system comprising two or more reactive adhesive films according to one of Claims 1 to 7, **characterized in that**
a first reactive adhesive film comprises a radical initiator and a second reactive adhesive film comprises an activator and these two reactive adhesive films are each present alternately.

10. Reactive adhesive film system according to Claim 8 or 9, comprising further films, layers, adhesives, backings, release papers and/or release liners.

11. Use of a reactive adhesive film according to one of Claims 1 to 7 and/or of a reactive adhesive film system according to one of Claims 8 to 10 for bonding materials of metal, wood, glass and/or plastic materials.

12. Method for producing a reactive adhesive film according to one of Claims 1 to 7, wherein the method comprises the following steps:
1. dissolving and/or finely distributing the ingredients in one or more solvent(s) and/or water,
2. mixing the dissolved or finely distributed ingredients,
3. coating a release liner or release paper, a backing material or a pressure sensitive adhesive with the mixture of dissolved or distributed ingredients according to step 2,
4. evaporating the solvent and/or water, and
5. optionally winding the reactive adhesive film into a roll,
wherein the ingredients include (a) a polymeric film-forming matrix, (b) at least one reactive monomer or reactive resin, where the at least one reactive monomer or the at least one reactive resin comprises N-vinylcaprolactam and/or N-vinylpyrrolidone, (c) a reagent selected from an initiator, in particular a radical initiator, or an activator, and optionally further additives and/or auxiliaries.

13. Kit for providing a two-component adhesive film system, comprising
(i) at least one first reactive adhesive film according to one of Claims 1 to 7 which comprises a radical initiator, and
(ii) at least one second reactive adhesive film according to one of Claims 1 to 7 which comprises an activator.

14. Composite bonded by means of the reactive adhesive film system according to one of Claims 8 to 10 or by the kit according to Claim 13.

## Revendications

1. Film adhésif réactif, comprenant (a) une matrice d'agent filmogène polymérique, (b) au moins un monomère réactif ou au moins une résine réactive et (c) un réactif, choisi parmi un initiateur, en particulier un initiateur de radicaux, ou un activateur, **caractérisé en ce que** l'au moins un monomère réactif ou l'au moins une résine réactive comprend du N-vinylcaprolactame et/ou de la N-vinylpyrrolidone.

2. Film adhésif réactif selon la revendication 1, **caractérisé en ce qu'**en plus du N-vinylcaprolactame et/ou de la N-vinylpyrrolidone, au moins un élément choisi parmi l'acide acrylique, des esters d'acide acrylique, l'acide méthacrylique, des esters d'acide méthacrylique, de préférence le méthacrylate de méthyle, l'acide méthacrylique, le méthacrylate de cyclohexyle, le méthacrylate de tétrahydrofurfuryle, le méthacrylate de 2-phénoxyéthyle, le méthacrylate 2-hydroxyéthyle, le méthacrylate de 2-hydroxypropyle, le méthacrylate de 4-hydroxybutyle, un mélange d'isomères de méthacrylate d'hydroxybutyle, le méthacrylate de méthyléther de diéthylèneglycol et/ou le diméthacrylate d'éthylèneglycol, est présent.

3. Film adhésif réactif selon l'une quelconque des revendications précédentes, **caractérisé en ce que** la matrice d'agent filmogène polymérique comprend un polymère thermoplastique, de préférence un polyuréthane thermoplastique, ou un élastomère ou un élastomère thermoplastique.

4. Film adhésif réactif selon l'une quelconque des revendications précédentes, **caractérisé en ce que** l'initiateur de radicaux comprend un peroxyde, de préférence un hydroperoxyde, particulièrement préférablement l'hydroperoxyde de diméthylbenzyle.

5. Film adhésif réactif selon l'une quelconque des revendications précédentes, **caractérisé en ce que** l'activateur comprend une amine, un dérivé de dihydropyridine, un sel de métal de transition ou un complexe de métal de transition, de préférence une phtalocyanine de fer(II).

6. Film adhésif réactif selon l'une quelconque des revendications précédentes, **caractérisé en ce qu'**il possède des propriétés autoadhésives.

7. Film adhésif réactif selon l'une quelconque des revendications précédentes, comprenant
(I) 10 à 90 % en poids de matrice d'agent filmogène polymérique, 10 à 90 % en poids d'au moins un monomère réactif ou d'au moins une résine réactive, l'au moins un monomère réactif ou l'au moins une résine réactive comprenant du N-vinylcaprolactame et/ou de la N-vinylpyrrolidone, et 1 à 20 % en poids d'initiateur de radicaux, de préférence 20 à 50 % en poids de matrice d'agent filmogène polymérique, 40 à 70 % en poids d'au moins un monomère réactif ou d'au moins une résine réactive et 5 à 15 % en poids d'initiateur de radicaux ; ou
(II) 10 à 90 % en poids de matrice d'agent filmogène polymérique, 10 à 90 % en poids d'au moins un monomère réactif ou d'au moins une résine réactive, l'au moins un monomère réactif ou l'au moins une résine réactive comprenant du N-vinylcaprolactame et/ou de la N-vinylpyrrolidone, plus de 0 à 10 % en poids d'activateur, de préférence 20 à 50 % en poids de matrice d'agent filmogène polymérique, 40 à 70 % en poids d'au moins un monomère réactif ou d'au moins une résine réactive et 0,1 à 5 % en poids d'activateur.

8. Système de film adhésif réactif, comprenant deux films adhésifs réactifs selon l'une quelconque des revendications précédentes, **caractérisé en ce que** le premier film adhésif réactif contient un initiateur de radicaux et le deuxième film adhésif réactif contient un activateur.

9. Système de film adhésif réactif, comprenant deux ou plusieurs films adhésifs réactifs selon l'une quelconque des revendications 1 à 7, **caractérisé en ce qu'**un premier film adhésif réactif contient un initiateur de radicaux et un deuxième film adhésif réactif contient un activateur et ces deux films adhésifs réactifs sont présents à chaque fois de manière alternée.

10. Système de film adhésif réactif selon la revendication 8 ou 9, comprenant d'autres films, couches, adhésifs, supports, papiers de séparation et/ou doublures de séparation.

11. Utilisation d'un film adhésif réactif selon l'une quelconque des revendications 1 à 7 et/ou d'un système de film adhésif réactif selon l'une quelconque des revendications 8 à 10 pour le collage de matériaux de métal, de bois, de verre et/ou de matières plastiques.

12. Procédé pour la préparation d'un film adhésif réactif selon l'une quelconque des revendications 1 à 7, le procédé comprenant les étapes suivantes :
1. dissolution et/ou fine division des ingrédients dans un ou plusieurs solvants et/ou de l'eau,
2. mélange des ingrédients dissous ou finement divisés,
3. revêtement d'une doublure de séparation ou d'un papier de séparation, d'un matériau de support ou d'un adhésif autocollant avec le mélange d'ingrédients dissous ou finement divisés selon l'étape 2,
4. évaporation du solvant et/ou de l'eau et
5. éventuellement, enroulement du film adhésif réactif en un rouleau,
les ingrédients comprenant (a) une matrice d'agent filmogène polymérique, (b) au moins un monomère réactif ou au moins une résine réactive, l'au moins un monomère réactif ou l'au moins une résine réactive comprenant du N-vinylcaprolactame et/ou de la N-vinylpyrrolidone, (c) un réactif, choisi parmi un initiateur, en particulier un initiateur de radicaux, et un activateur, ainsi qu'éventuellement d'autres additifs et/ou auxiliaires.

13. Kit pour la mise à disposition d'un système de film adhésif à deux composants, comprenant
(i) au moins un premier film adhésif réactif selon l'une quelconque des revendications 1 à 7, qui contient un initiateur de radicaux, et
(ii) au moins un deuxième film adhésif réactif selon l'une quelconque des revendications 1 à 7, qui contient un activateur.

14. Corps composite qui est lié par le système de film adhésif réactif selon l'une quelconque des revendications 8 à 10 ou par le kit selon la revendication 13.
